# EUROPÄISCHE PATENTSCHRIFT

(11) **EP 0 265 819 B1**
(45) Veröffentlichungstag und Bekanntmachung des Hinweises auf die Patenterteilung: **10.03.1993**
(21) Anmeldenummer: 87115377.1
(22) Anmeldetag: 21.10.1987
(51) Int. Cl.: C09B 67/12

(54) **Verfarhren zur Herstellung von farbstarken Polyhalogenkupferphthalocyaninpigmenten**
Process for the manufacture of colour-fast polyhalogenated copper phthalocyanine pigments
Procédé de fabrication de pigments de phtalocyanines de cuivre polyhalogénées à coloration intense

(30) Priorität: 25.10.1986 DE 3636428
(43) Veröffentlichungstag der Anmeldung: 04.05.1988
(73) Patentinhaber: BASF Aktiengesellschaft, 67063 Ludwigshafen (DE)
(72) Erfinder: Kranz, Joachim, Dr., D-6700 Ludwigshafen (DE); Schmeidl, Karl, Dr., D-6700 Ludwigshafen (DE)

(56) Entgegenhaltungen:
- EP-A- 0 058 888
- EP-A- 0 182 207
- FR-A- 2 270 305
- FR-A- 2 333 836
- FR-A- 2 417 531
- FR-A- 2 442 875

## Beschreibung

Bei der Halogenierung von Kupferphthalocyanin wird ein amorphes bis mikrokristallines agglomeriertes rohes Polyhalogenkupferphthalocyanin erhalten, das wegen der hohen Agglomeration trübe und farbschwache Färbungen liefert. Aus diesem Grunde wird das Rohpigment durch Rekristallisation in coloristisch optimale Pigmentformen überführt. Dieser Vorgang - auch als Formierung oder Finish bezeichnet - erfolgt z.B. in der Wärme in 90 bis 98 gew.-%iger Schwefelsäure, in Xylol (DE-B-20 13 818), in o-Nitrophenol (DE-C-12 42 180) oder in einem Gemisch aus Benzoesäure und/oder Alkylbenzoesäuren und Wasser bei 80 bis 130°C (DE-A-34 42 118). Weiterhin ist aus der DE-B-28 51 752 die Formierung von Rohpigmenten in organischen Lösungsmitteln allein oder im Gemisch mit Wasser bekannt.

Coloristisch interessante Pigmentformen werden durch Wärmebehandlung in o-Nitrophenol erhalten. Dieses Formierungsmedium hat jedoch erhebliche Nachteile; es riecht stark, da es bereits bei Raumtemperatur einen merklichen Dampfdruck aufweist, es sublimiert leicht und ist mit Wasserdampf flüchtig. Weitere Nachteile sind, daß o-Nitrophenol einen niedrigen Schmelzpunkt hat und in Wasser merklich löslich ist, wodurch Verluste bei der Zurückgewinnung entstehen.

Ein zusätzlicher Nachteil ist, daß das bei der Abtrennung des Nitrophenols durch Zugabe von Alkalimetallhydroxid entstehende o-Nitrophenolatanion eine hohe Affinität zum Polyhalogenkupferphthalocyaninpigment aufweist, so daß zur weitgehend quantitativen Entfernung des Nitrophenolats ein langer Waschvorgang notwendig ist.

Der Finish in Xylol nach der DE-B- 20 13 818, bei dem die Pigmentform durch Gefriertrocknung direkt in Form eines nicht agglomerierten Pulvers erhalten wird, muß sorgfältig durchgeführt und überwacht werden, damit keine Überkristallisation erfolgt.

Aufgabe der Erfindung war es, ein Verfahren zur Formierung von Polyhalogenkupferphthalocyanin bereitzustellen, das coloristisch hochwertige Pigmentformen nach einem umweltfreundlichen Verfahren liefert und das ermöglicht, für die unterschiedlichen Anwendungszwecke optimal angepaßte Pigmentformen herzustellen.

Die Erfindung betrifft ein Verfahren zur Herstellung von farbstarken Polyhalogenkupferphthalocyaninpigmenten durch Rekristallisation der feinteiligen, agglomerierten Rohpigmente in heterogener organisch-wäßriger Phase in der Wärme, das dadurch gekennzeichnet ist, daß man als organisch-wäßrige Phase ein heterogenes Gemisch aus aliphatischen Ketonen mit insgesamt 3 bis 9 C-Atomen und Wasser verwendet.

Nach dem Verfahren erhält man pulverweiche Polyhalogenkupferphthalocyaninpigmente, die farbstarke lasierende, brillante und farbtonreine Färbungen liefern.

Die Pigmente fallen beim Verfahren gemäß der Erfindung in der Form von kugelförmigen Granulaten von bis zu 5 mm Durchmesser an. Die 60 bis 70 Gew.-% Pigment enthaltenden Granulate - der Rest ist Wasser und Keton im Verhältnis von ungefähr 3 : 2 Gewichtsteilen - können unter Erhalt ihrer Form getrocknet werden, z.B. in Trockentrommeln. Die erhaltenen Granulate sind staubarm und leicht dispergierbar.

Das Verfahren gemäß der Erfindung wird im allgemeinen so durchgeführt, daß das bei der Synthese erhaltene Polyhalogenkupferphthalocyanin (Polyhalogen CuPc) in Form des Preßkuchens in Wasser suspendiert und nach dem Zugeben des Ketons auf die gewünschte Temperatur erwärmt wird. Entscheidend für die Formierung zur Pigmentform in der Form möglichst einheitlicher und kompakter Kristalle (Teilchen) ist, daß das Rohpigment vollständig von dem Keton umhüllt wird. Bei den wasserlöslichen Ketonen wie Aceton und Diethylketon erzwingt man eine Bildung der heterogenen Phase durch Zugabe von Salz. Der gleiche Zweck kann auch durch Zugabe von Alkalimetallhydroxidlösung erzielt werden.

Als Polyhalogen-CuPc kommen in Betracht: Polychlor-CuPc mit 10 bis 16 Chloratomen und Polybrom-chlor-CuPc mit 0 bis 13, vorzugsweise 4 bis 12 Chloratomen und 14 bis 2, vorzugsweise 12 bis 4 Bromatomen im Molekül.

Als aliphatische Ketone kommen z.B. in Betracht: Aceton, Methylethylketon, Diethylketon, Methyl-n-propylketon, Methylisopropylketon, Methyl-n-butylketon, Methylisobutylketon, Methylisoamylketon, Diisopropylketon, Di-n-propylketon, Di-n-butylketon und Di-isobutylketon und deren Gemische. Von diesen sind aus technischen Gründen Methylethylketon, Methylisobutylketon, Methyl-n-propylketon und Methylisopropylketon bevorzugt. Ganz besonders bevorzugt ist Methylisobutylketon. Das Verhältnis von Rohpigment zu Keton liegt im allgemeinen im Bereich von 1 : 0,3 bis 1 : 2,0, vorzugsweise von 1 : 0,3 bis 1 : 1,5 Gewichtsteilen.

Die Menge an Wasser ist nicht kritisch, wenn das Gemisch vor, während und nach der Kristallisation durchmischbar ist, jedoch wird man eine große Wassermenge vermeiden, da hierdurch die Raum-Zeit-Ausbeute gesenkt wird. In der Regel wendet man - bezogen auf das Rohpigment (gerechnet trocken) - die 3 bis 4 fache Gewichtsmenge Wasser.

Bei Verwendung von in Wasser löslichen bis partiell gut löslichen Ketonen wird dem wäßrigen Medium Salz oder Lauge zugegeben, damit eine zweite, Keton enthaltende Phase, die für die Rekristallisation erforderlich ist, gebildet wird. Als Salze kommen hier Kaliumchlorid, Natriumsulfat, Calciumchlorid, vorzugsweise Natriumchlorid in Betracht. Durch Zusetzen von Natron- oder Kalilauge kann der gleiche Effekt erzielt werden.

Pigmentformen, die besonders reine und farbstarke Färbungen liefern, werden erhalten, wenn man dem wäßrigen Gemisch starke Basen wie Natronlauge oder Kalilauge zusetzt. Die Menge dieser Basen wird so gewählt, daß die wäßrige Phase am Ende der Finishoperation alkalisch reagiert.

Die Menge an diesen Basen kann bis zu 2 Gew.-Teile je 100 Gew.-Teile Rohpigment betragen. Bevorzugt sind 1 bis 1,6 Gew.-Teile Alkalimetallhydroxid, wie Natrium- oder Kaliumhydroxid, je 100 Gew.-Teile Rohpigment.

Die Rekristallisation erfolgt bei der Siedetemperatur der Gemische bis 120°C. Bei Anwendung von Temperaturen, die oberhalb der Siedepunkte der azeotrop siedenden Gemische aus Keton und Wasser liegen, erfolgt die Rekristallisation unter Druck. Vorzugsweise arbeitet man im Bereich von 55 bis 105°C, gegebenenfalls unter Druck. Beim Rühren und Erwärmen des Gemisches mit dem Rohpigment fällt das Pigment in Form eines kugelförmigen Granulats von ca. 0,5 bis 5 mm Durchmesser an.

Am Ende der Kristallisation kann das Granulat durch Dekantieren, vorzugsweise durch Absaugen und Waschen, leicht isoliert werden. Beim Trocknen bleibt das Granulat erhalten. Das Trocknen erfolgt vorteilhafterweise in Trockentrommeln. Das beim Trockenvorgang abgehende Gemisch aus Keton und Wasser wird kondensiert und zusammen mit dem beim Isolieren erhaltenen Filtrat und Waschwasser auf Keton aufgearbeitet.

Das Formierungsgemisch kann auch so aufgearbeitet werden, daß man das Keton direkt aus dem Formierungsgemisch zusammen mit Wasser als Azeotrop abdestilliert, wobei die Granulate zum Teil zerfallen. Das Pigment wird dann aus der wäßrigen Phase in üblicher Weise durch Absaugen abgetrennt, mit Wasser neutral gewaschen und getrocknet.

Die folgenden Ausführungsbeispiele sollen das Verfahren zusätzlich erläutern. Die Teile sind Gewichtsteile und die Prozente Gewichtsprozente.

### Beispiel 1

In einem Rührgefäß werden 75 Teile Polybromchlorkupferphthalocyanin (Chlorgehalt : 7 %, Bromgehalt : 58 %) in Form eines 30 %igen Preßkuchens mit 45 Teilen Methyl-isobutylketon und 4 Teilen 20 %iger Natronlauge gemischt und unter Rühren auf Rückflußtemperatur erhitzt. Bei Temperaturen um 80° setzt der "Flush" ein : das Rohpigment geht unter Verdrängung des Wassers in die organische Phase über, wobei sich aus dem ketonreichen Feststoffgemisch langsam Kugeln bilden.

Nach 12 stündigem Halten auf Rückflußtemperatur (89°C) wird das Keton abdestilliert. Das rekristallisierte Grünpigment wird filtriert, gewaschen und getrocknet.

Ausbeute: 73 Teile Grünpigment, das farbstarke und farbtonreine Färbungen mit hoher Lasur liefert. Das Pigment weist gute Pulverweichheit auf. Das erhaltene Pigment ist in coloristischer Sicht dem nach dem Verfahren des Standes der Technik erhaltenen ebenbürtig.

### Beispiel 2 bis 8

Es wird wie in Beispiel 1 verfahren, jedoch wendet man anstelle von Methyl-isobutylketon die im folgenden genannten Ketone in der angegebenen Menge bei der genannten Temperatur an. Man erhält dann Pigmente mit praktisch den gleichen coloristischen Eigenschaften. Bei der Anwendung von Aceton und Diethylketon wird zur vollständigen Ausbildung der finishtechnisch wichtigen zweiten Phase noch zusätzlich Kochsalz zugegeben.

| Beisp. | Keton | Sdp. [°C] | Sdp. des Azeotrops [°C] | Menge Keton | NaCl |
|---|---|---|---|---|---|
| 2 | Aceton | 56 | 58 | 105 Teile | 90 Teile |
| 3 | Methylethyl- | 79 | 73 | 107 " | - |
| 4 | Methylisopropyl- | 92 | 78 | 60 " | - |
| 5 | Methyl-n-propyl- | 102 | 85 | 65 " | - |
| 6 | Di-ethyl- | 100 | 83 | 45 " | 10 Teile |
| 7 | Di-isopropyl- | 123 | 90 | 38 " | - |
| 8 | Methylisoamyl- | 144 | 95 | 34 " | - |

### Beispiel 9

200 Teile rohes Polybromchlor-CuPc (mit 7 % Cl, 58 % Br) werden in Form des 30 %igen wäßrigen Preßkuchens mit 260 Teilen Methylethylketon und 10 Teilen 20 %iger Natronlauge in einem Autoklaven 8 Stunden lang bei 100° gerührt. Dann wird entspannt, das Keton abdestilliert und das Pigment wie in Beispiel 1 isoliert.

Ausbeute: 194 Teile eines Grünpigmentes, das ganz ähnliche coloristische und anwendungstechnische Eigenschaften aufweist, wie das nach Beispiel 1 erhaltene.

Die Aufarbeitung des Gemisches nach der Rehkristallisation kann auch so erfolgen: Nach dem Abkühlen des Druckgefäßes wird das Pigmentgranulat durch Filtration, Dekantieren oder Absieben von der flüssigen Phase getrennt; kurz mit Wasser gewaschen, um oberflächlich anhaftendes Alkali und Salz zu entfernen (in den Granulaten sind keine Ionen eingeschlossen; die Leitfähigkeitsprobe ist negativ) und getrocknet. Die erhaltene staubarme bis staubfreie Pigmentform kann direkt, d.h. ohne Pulverisieren oder Mahlen, angewendet werden.

### Beispiele 10 bis 16

Man verfährt wie in Beispiel 9, ersetzt das Methylethylketon jedoch durch die angegebenen Ketone in der angegebenen Menge. Man erhält Grünpigmente, die vergleichbare coloristische und anwendungstechnische Eigenschaften aufweisen.

| Beispiel | Keton | -menge | NaCl-zusatz |
|---|---|---|---|
| 10 | Aceton | 320 Teile | 150 Teile |
| 11 | Methyl-isopropylketon | 160 " | - |
| 12 | Methyl-n-propylketon | 160 " | - |
| 13 | Methyl-isobutylketon | 120 " | - |
| 14 | Di-ethylketon | 115 " | - |
| 15 | Di-isopropylketon | 100 " | - |
| 16 | Methylisoamylketon | 60 " | - |

### Beispiel 17

In einem Rührgefäß werden 100 Teile rohes Polybromchlorkupferphthalocyanin (26 % Cl und 33 % Brom) in Form des 30 %igen wäßrigen Preßkuchens mit 60 Teilen Methyl-isobutylketon und 8 Teilen 20 %iger Natronlauge 10 Stunden lang bei Rückflußtemperatur (89°C) formiert. Nach dem Aufarbeiten analog Beispiel 1 erhält man ein pulverweiches Grünpigment, das in den coloristischen Eigenschaften den nach dem Verfahren des Standes der Technik erhaltenen entspricht.
Ausbeute: 96 Teile

### Beispiel 18

Man verfährt wie in Beispiel 17, verwendet jedoch anstelle von 60 Teilen Methyl-isobutylketon 90 Teile Methyl-isopropylketon und führt die Kristallisation in einem Druckgefäß bei 100°C durch. Man isoliert ein Pigmentgranulat, das anwendungstechnisch und coloristisch dem nach Beispiel 17 erhaltenen Pigment entspricht.

### Beispiel 19

100 Teile rohes Polychlor-CuPC (49,5 % Cl) in Form des 33 %igen wäßrigen Preßgutes, 70 Teile Methyl-isobutylketon und 5 Teile 20 %ige NaOH werden unter Rühren 10 Std. lang auf Rückflußtemperatur (89°C) erwärmt. Das entstandene Pigmentgranulat wird abgesiebt, mit Wasser gewaschen und getrocknet.
Ausbeute: 95 Teile eines Grünpigmentes, das in der Farbstärke, der Brillanz, der Reinheit und der Lasur sowie im Farbton dem nach den Verfahren des Standes der Technik erhaltenen Pigmenten entspricht. Aus der "Siebflüssigkeit" wird das Keton destillativ zurückgewonnen.

### Beispiel 20

Es wird wie in Beispiel 19 verfahren, jedoch werden anstelle von 70 Teilen Methyl-isobutylketon 60 Teile Di-isopropylketon verwendet. Man erhält ein Grünpigment, das praktisch die gleichen coloristischen und anwendungstechnischen Eigenschaften aufweist wie das nach Beispiel 19 erhaltene.

### Beispiel 21

Es wird wie in Beispiel 19 verfahren, jedoch verwendet man anstelle von 70 Teilen Methyl-isobutylketon 100 Teile Di-ethylketon und führt die Kristallisation entsprechend Beispiel 9 in einem Druckgefäß bei 100°C durch. Man erhält Pigmentgranulate, die in den coloristischen und anwendungstechnischen Eigenschaften dem nach Beispiel 19 erhaltenen Pigment entsprechen.

### Beispiel 22

Verwendet man anstelle von 70 Teilen Methylisobutylketon lediglich 50 Teile Methyl-isoamylketon, verfährt jedoch ansonsten in ähnlicher Weise wie in Beispiel 19 beschrieben, so erhält man sowohl bei Rückflußtemperatur (89°C) als auch unter Druck bei 100°C, Grünpigmente mit sehr guten koloristischen Eigenschaften.

## Patentansprüche

1. Verfahren zur Herstellung von farbstarken Polyhalogenkupferphthalocyaninpigmenten durch Rekristallisation der feinteiligen, agglomerierten Rohpigmente in heterogener organisch-wäßriger Phase in der Wärme, dadurch gekennzeichnet, daß man als organisch-wäßrige Phase ein heterogenes Gemisch aus aliphatischen Ketonen mit insgesamt 3 bis 9 C-Atomen und Wasser verwendet.

2. Verfahren gemäß Anspruch 1, dadurch gekennzeichnet, daß man C₄-bis C₇-Alkaonen verwendet.

3. Verfahren gemäß Anspruch 1 oder 2, dadurch gekennzeichnet, daß das Verhältnis Rohpigment zu Keton 1 : 0,3 bis 1 : 2,0 Gewichtsteile beträgt.

4. Verfahren gemäß Anspruch 1 oder 2, dadurch gekennzeichnet, daß das Verhältnis Rohpigment zu Keton 1:0,3 bis 1:1,5 Gewichtsteile beträgt.

5. Verfahren gemäß Anspruch 1, 2, 3 oder 4, dadurch gekennzeichnet, daß das Gemisch auf Siedetemperatur bis 120°C erwärmt wird.

6. Verfahren gemäß Anspruch 1, 2, 3 oder 4, dadurch gekennzeichnet, daß die wäßrige Phase Salz, ein anorganisches Hydroxid oder ein Gemisch davon gelöst enthält.

## Claims

1. A process for the preparation of a polyhalocopper phthalocyanine pigment of high color strength by recrystallizing the finely divided agglomerated crude pigment in a heterogeneous aqueous organic phase, at elevated temperatures, wherein the aqueous organic phase used is a heterogeneous mixture of an aliphatic ketone having a total of 3 to 9 carbon atoms and water.

2. A process as claimed in claim 1, wherein C₄-C₇-alkanone is used.

3. A process as claimed in claim 1 or 2, wherein the weight ratio of crude pigment to ketone is from 1:0.3 to 1:2.0.

4. A process as claimed in claim 1 or 2, wherein the weight ratio of crude pigment to ketone is from 1:0.3 to 1:1.5.

5. A process as claimed in any of claims 1 to 4, wherein the mixture is heated to the boiling point to 120°C.

6. A process as claimed in any of claims 1 to 4, wherein the aqueous phase contains, in solution, a salt, an inorganic hydroxide or a mixture of these.

## Revendications

1. Procédé de préparation de pigments de phtalocyanine de cuivre polyhalogénée à fort pouvoir colorant, par recristallisation, à chaud dans une phase hydro-organique hétérogène, des pigments bruts finement divisés et agglomérés, caractérisé en ce qu'on utilise, comme phase hydro-organique, un mélange hétérogène de cétones aliphatiques contenant au total 3 à g atomes de carbone et d'eau.

2. Procédé selon la revendication 1, caractérisé en ce qu'on utilise des alcanones en C₄ à C₇.

3. Procédé selon la revendication 1 ou 2, caractérisé en ce que le rapport du pigment brut à la cétone est compris entre 1:0,3 et 1:2,0 parties en poids.

4. Procédé selon la revendication 1 ou 2, caractérisé en ce que le rapport du pigment brut à la cétone est compris entre 1:0,3 et 1:1,5 partie en poids.

5. Procédé selon l'une quelconque des revendications 1 à 4, caractérisé en ce que le mélange est chauffé à la température d'ébullition jucqu'à 120°C.

6. Procédé selon l'une quelconque des revendications 1 a 4, caractérisé en ce que la phase aqueuse contient en solution du sel, un hydroxyde inorganique ou un mélange de ceux-ci.
